# EUROPEAN PATENT APPLICATION

(11) **EP 3 117 705 A1**
(43) Date of publication of application: **18.01.2017**
(21) Application number: 16179413.6
(22) Date of filing: 14.07.2016
(51) Int. Cl.: A01K 87/06, A01K 87/08

(54) **REEL SEAT WITH GRIPPING SURFACE**

(30) Priority: 14.07.2015 US 201562192453 P; 23.06.2016 US 201615191125
(71) Applicant: Huang, Ben, Huntington Beach, CA 92648 (US)
(72) Inventor: Huang, Ben, Huntington Beach, CA 92648 (US)
(74) Representative: Boult Wade Tennant

(57) **Abstract**

Disclosed are reel seats for use with a gripping member to provide a gripping surface on the exterior of a reel seat. The reel seat (12) may include a recessed portion (26) that extends partially or fully around a portion of the reel seat. The recessed portion may be configured to receive a gripping member (18) that may be adhered to the recessed portion. The gripping member may include multiple layers designed to provide a comfortable grip and maximum sensitivity to an angler using the reel seat.

## Description

### BACKGROUND OF THE INVENTION

### Field of the Invention

Certain embodiments disclosed herein relate to fishing poles and the construction thereof, and more particularly to reel seats having a gripping surface applied

### Description of the Related Art

There are many fishing poles used in the sport of fishing. The most common fishing poles include a reel seat configured to receive a fishing reel compatible with the fishing pole. However, available reel seats are generally constructed of a solid material, such as aluminum or graphite, and lack a surface providing desirable performance characteristics.

### SUMMARY OF THE INVENTION

The disclosure herein provides a reel seat with an improved gripping surface for providing better comfort and control while maintaining transmittal of vibrations through the rod and methods for producing such reel seats. For purposes of this summary, certain aspects, advantages, and novel features of the invention are described herein. It is to be understood that not necessarily all such advantages may be achieved in accordance with any particular embodiment of the invention. Thus, for example, those skilled in the art will recognize that the invention may be embodied or carried out in a manner that achieves one advantage or group of advantages as taught herein without necessarily achieving other advantages as may be taught or suggested herein.

In some embodiments, a reel seat to be used with a fishing pole is provided. The reel seat can include a main body portion defining a first end and a second end. The main body portion can comprise a longitudinal hollow cavity extending from the first end of the main body portion to the second end of the main body portion configured to receive a handle portion of a fishing pole; a securing portion including a first insert portion configured to receive a first portion of a fishing reel arm and a second insert portion configured to receive a second portion of a fishing reel arm; and a recessed area extending around at least some of an exterior portion of the main body portion of the reel seat, the recessed area including a depth and an outer periphery defining a recessed area shape; and a gripping member comprising a material with different characteristics than a material forming the main body portion adjacent the recessed area, wherein an outer periphery of the gripping member corresponds to the recessed area shape; wherein the gripping member is secured to the main body portion such that the gripping member is secured within the recessed area.

In some embodiments, a method of making a reel seat to be used with a fishing pole is provided. The method can comprise: providing a main body portion defining a first end and a second end, the main body portion comprising: a longitudinal hollow cavity extending from the first end of the main body portion to the second end of the main body portion configured to receive a handle portion of a fishing pole; a securing portion including a first insert portion configured to receive a first portion of a fishing reel arm and a second insert portion configured to receive a second portion of a fishing reel arm; and a recessed area extending around at least some of an exterior portion of the main body portion of the reel seat; providing a gripping member comprising a material with different characteristics than a material forming the main body portion adjacent the recessed area, wherein an outer periphery of the gripping member corresponds to the recessed area shape; and securing the gripping member onto the main body portion such that the gripping member is secured within the recessed area.

In some embodiments, a reel seat with a resilient insert is provided. The reel seat may comprise a main body portion defining a first end and a second end. The main body portion may include a longitudinal hollow cavity extending from the first end of the main body portion to the second end of the main body portion, wherein the longitudinal hollow cavity is configured to receive a handle portion of a fishing pole. The main body portion may also include a first insert portion configured to receive a first portion of a fishing reel arm and a second insert portion configured to receive a second portion of a fishing reel arm. The main body portion may also include a recessed area extending around at least some of an exterior portion of the main body portion of the reel seat. The reel seat may further comprise a gripping member comprising a resilient material, wherein the gripping member is shaped to correspond to the recessed area of the main body portion, such that the gripping member will substantially fill the recessed area when applied to the main body portion. The gripping member may be adhered to the main body portion such that the gripping member substantially fills the recessed area.

In some embodiments the reel seat is attached to the handle portion of a fishing pole. The fishing pole may comprise a fore grip, a rear grip, and a butt grip. The gripping member of the reel seat may correspond to the material or appearance of at least a portion of the fore grip, the rear grip, or the butt grip.

### BRIEF DESCRIPTION OF THE DRAWINGS

Various embodiments are depicted in the accompanying drawings for illustrative purposes, and should in no way be interpreted as limiting the scope of the embodiments. In addition, various features of different disclosed embodiments can be combined to form additional embodiments, which are part of this disclosure.
Fig. 1 is a perspective view of an embodiment of a fishing pole having a reel seat with a gripping surface.
Fig. 2 is a perspective view of an embodiment of a handle portion of a fishing pole having a reel seat with a gripping surface.
Fig. 3 is a side view of an embodiment of a handle portion of a fishing pole having a reel seat with a gripping surface.
Fig. 4 is a side view of an embodiment of a handle portion of a fishing pole having a reel seat with a gripping surface.
Fig. 5 is a side view of an embodiment of a handle portion of a fishing pole having a reel seat with a gripping surface.
Fig. 6 is a perspective view of an embodiment of a reel seat with a gripping surface.
Fig. 7 is a side view of an embodiment of a reel seat configured to receive a gripping member.
Fig. 8 is a side view of an embodiment of a reel seat with a gripping surface.
Fig. 9 is a back view of an embodiment of a reel seat with a gripping surface.
Fig. 10 is a front view of an embodiment of a reel seat with a gripping surface.
Fig. 11 is a bottom view of an embodiment of a reel seat with a gripping surface.
Fig. 12 is a top view of an embodiment of a reel seat with a gripping surface.
Fig. 13 is a view of an embodiment of a gripping member configured to be used with a reel seat.
Fig. 14 is a perspective view of an embodiment of a reel seat with a gripping surface.
Fig. 15 is a side view of an embodiment of a reel seat with a gripping surface.
Fig. 16 is a side view of an embodiment of a reel seat configured to receive a gripping member.
Fig. 17 is a front view of an embodiment of a reel seat with a gripping surface.
Fig. 18 is a back view of an embodiment of a reel seat with a gripping surface.
Fig. 19 is a bottom view of an embodiment of a reel seat with a gripping surface.
Fig. 20 is a top view of an embodiment of a reel seat with a gripping surface.
Fig. 21 is a view of an embodiment of a gripping member configured to be used with a reel seat.
Fig. 22 is a perspective view of an embodiment of a reel seat with a gripping surface.
Fig. 23 is a side view of an embodiment of a reel seat with a gripping surface.
Fig. 24 is a side view of an embodiment of a reel seat configured to receive a gripping member.
Fig. 25 is a front view of an embodiment of a reel seat with a gripping surface.
Fig. 26 is a back view of an embodiment of a reel seat with a gripping surface.
Fig. 27 is a top view of an embodiment of a reel seat with a gripping surface.
Fig. 28 is a bottom view of an embodiment of a reel seat with a gripping surface.
Fig. 29 is a view of an embodiment of a gripping member configured to be used with a reel seat.
Fig. 30 is a perspective view of an embodiment of a reel seat with a gripping member partially applied and a step in a method of applying a gripping member to a reel seat.

### DETAILED DESCRIPTION OF THE PREFERRED EMBODIMENT

There are many fishing poles used in the sport of fishing. The most common grips have utilized ethylene vinyl acetate or cork to provide a gripping surface. New improvements to grips have introduced previously unavailable opportunities to enhance various visual and performance aspects of fishing pole grips. However, reel seats of fishing poles have not been modified to take advantage of the new materials.

In one embodiment disclosed herein, a reel seat is provided with an improved gripping surface for providing better comfort and control while maintaining transmittal of vibrations through the rod and methods for producing such reel seats. For purposes of this summary, certain aspects, advantages, and novel features of the invention are described herein. It is to be understood that not necessarily all such advantages may be achieved in accordance with any particular embodiment of the invention. Thus, for example, those skilled in the art will recognize that the invention may be embodied or carried out in a manner that achieves one advantage or group of advantages as taught herein without necessarily achieving other advantages as may be taught or suggested herein.

### I. Overview

Disclosed herein are reel seats for use securing a fishing reel to a fishing pole, methods of making such reel seats, and fishing poles with such reel seats attached. In some embodiments, the reel seats as disclosed herein have a grip portion that provides transmission of vibrations from the fishing rod, aesthetic appeal, and a comfortable surface. Fishing poles generally include a reel seat which is configured to receive and secure a fishing reel for operation with the pole. Fishing reels typically are secured to a fishing pole with a reel seat which receives the reel foot of the fishing reel. While fishing, an angler often desires to feel the transmission of rod vibrations through the handle of the pole. Thus, reel seats are often made out of graphite or aluminum to allow the transmission from the shaft of the pole to the angler's hand. However, such reel seats often lack comfort compared to other materials and may also lack tackiness, particularly when wet, which is beneficial to the angler. The embodiments disclosed herein offer transmission of vibrations through the reel seat while also providing a comfortable, functional, and aesthetically pleasing gripping surface on the reel seat.

Embodiments of the present invention provide a lightweight/low density griping surface with sufficient torsion resistance on at least portions of a reel seat. In some embodiments, a finished grip portion of a reel seat may include a resilient material that is resilient relative to the structural portion of the seat that holds the reel to the pole. In some embodiments, a finished grip portion of a reel seat may include a combined polyurethane/thin fabric layer adhered to an EVA base layer. In some embodiments, this may provide a lightweight water resistant grip on the surface of a reel seat, while still providing the sensitive vibration feel and structural benefits to be able to float on water even when wet.

In some embodiments, the surface of a reel seat may include one or more recesses which may be configured to receive a supplemental gripping material. For example, the gripping material may be one as described in U.S. Patent Application No. 12/753,669 filed April 2, 2010, now U.S. patent no. 8,518,505, which is hereby incorporated herein by reference in its entirety. In some embodiments, the gripping material of a fore grip, rear grip, and/or butt grip may be made of the same or a similar material. In some embodiments, the gripping material may instead be generated with injection molding, 3D printing, or another appropriate process.

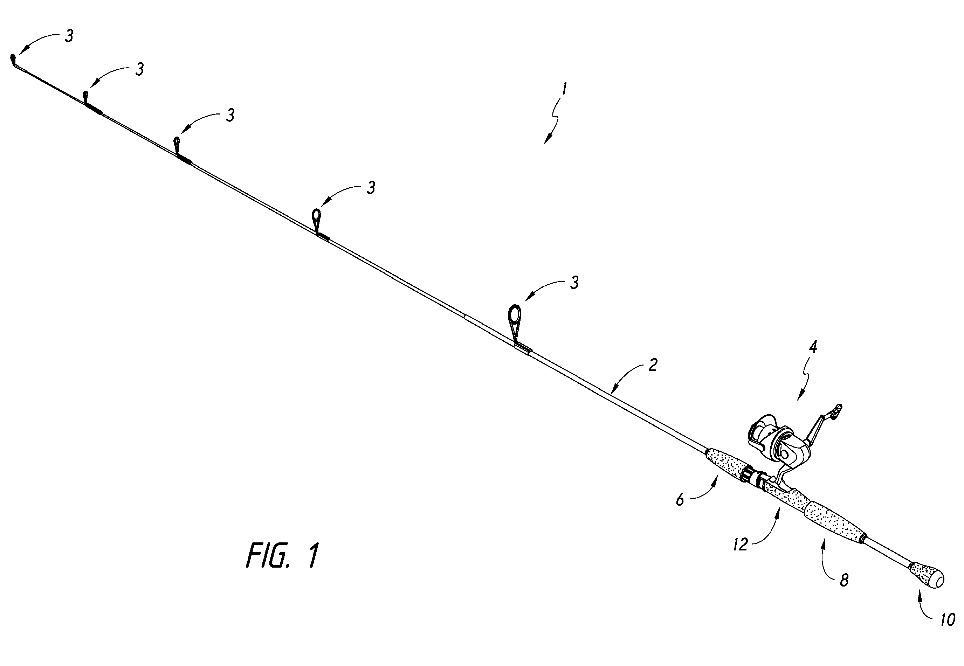

Figure 1 depicts a fishing pole 1 including a reel seat 12 as disclosed herein. Fishing poles generally have several basic components including: a shaft of the pole 2 (which may be in several pieces), a series of eyelets or line guides 3, a reel seat 12, and a series of grips 6, 8, and 10. The handle depicted in Figure 1 includes a fore grip 6, and a rear grip 8, which may be split in some embodiments to include a butt cap 10. The reel seat 12 is configured to receive and secure a fishing reel 4. Reel seats generally comprise two insert portions which each receive one end of the foot of a fishing reel. In some embodiments, at least one of the insert portions is adjustable to secure the fishing reel in position. In some embodiments, an insert portion may comprise a cutout sleeve, an adjustable sleeve, a clamp, or another mechanism to secure one end of a fishing reel in position. There are a variety of types of fishing reels which can be chosen based on performance requirements and angler preference. Common types of reels include baitcast, spincast, spinning, trolling, and fly reels, for example. The embodiment depicted in Figure 1 includes a spinning reel, however, the reel seats as described herein may be configured to receive any of these types of fishing reels.

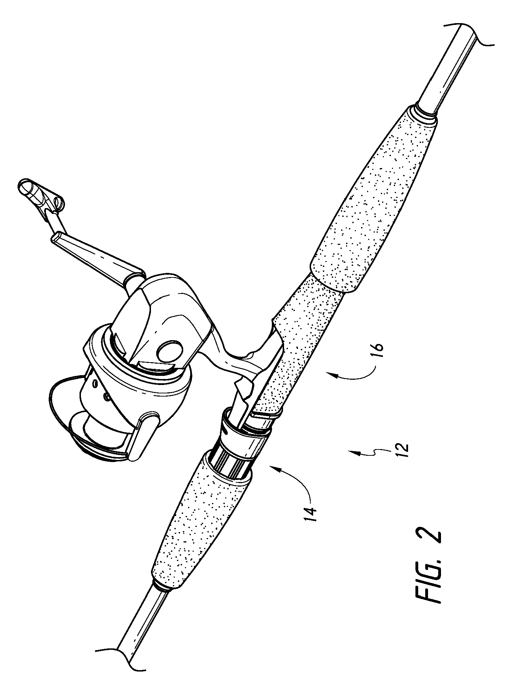

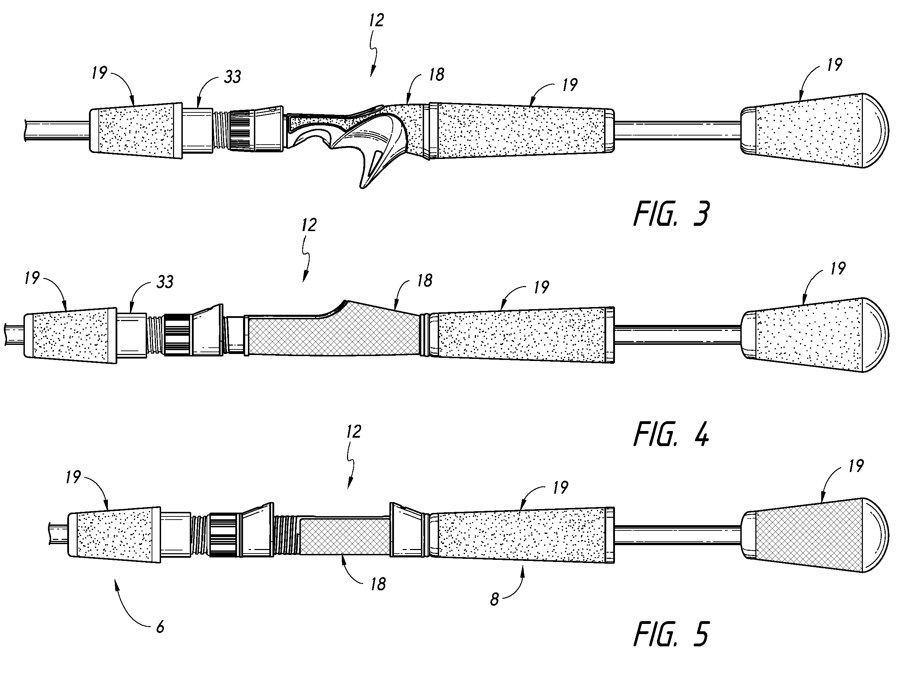

Figure 2 depicts a closer view of the handle portion of a fishing pole including a reel seat 12 as disclosed herein. In some embodiments, the reel seat includes a main body portion 16 and a securing portion 14. The components of the main body portion 16 and the securing portion 14 as implemented in some embodiments are configured to receive a variety of fishing reels of various sizes and designs are described in detail below. Figures 3-5 depict fishing poles with reel seats configured to receive various fishing reels. Figure 3 depicts an embodiment of a fishing pole with a reel seat 12 configured to receive a baitcast or spincast reel. Figures 4 and 5 depict fishing poles with reel seats 12 configured to receive spinning reels. The reel seats 12, as depicted in the embodiments of Figs. 3-5 include a gripping member 18 that provides improved performance characteristics. In some embodiments, the reel seats may have different configurations or may be configured to receive different styles of fishing reels.

In some embodiments, the gripping member 18 may be manufactured as the same material used as a gripping portion 19 of the fore grip 6, rear grip 8, or butt cap 10 of a fishing pole. For example, Fig. 3 illustrates a fishing pole having a gripping member 18 with one or more consistent characteristic between the foregrip 6, rear grip 8, reel seat 12, and butt cap 10. In some embodiments, the gripping member 18 present on the reel seat is configured to match the design of the other portions of the handle, but may be made out of a different material. In some embodiments, the gripping member 18 may be made out of different materials and have a different design than those used as a gripping portion 19 of the foregrip 6, rear grip 8, or butt cap 10, for example, as shown in Fig. 4. In some embodiments, the gripping member 18 may match some other gripping portions of a fishing pole handle, but may not match all of the handle portions. For example, as shown in Fig. 5, the gripping member 18 uses the same or similar material or design as the rear grip 8, but does not use the same or similar material or design as the butt grip 10.

In some embodiments, the gripping member 18 may comprise a thin flexible panel which may be bonded, adhered, or otherwise attached to the reel seat 12. The gripping member 18 may, in some embodiments, be made out of an injection molded polymer configured to be attached to the reel seat 12. In some embodiments the gripping member 18 may be manufactured as a rigid component, such as a hard plastic, for attaching to the reel seat 12. Example materials that may be used in the gripping member 18 in some embodiments are described further below. In some embodiments, the gripping member 18 may be manufactured in several pieces that attach together to form the desired shape for the reel seat 12. For example, the gripping member 18 may be manufactured as top and bottom portions or left and right portions, which when connected form the desired shape for the reel seat 12. In some embodiments, a gripping member 18 is deposited onto the reel seat 12 in the desired locations.

Although several embodiments, examples, and illustrations are disclosed, it will be understood by those of ordinary skill in the art that the inventions described herein extend beyond the specifically disclosed embodiments, examples, and illustrations and includes other uses of the inventions and obvious modifications and equivalents thereof. Embodiments of the inventions are described with reference to the accompanying figures, wherein like numerals refer to like elements throughout. The terminology used in the description presented herein is not intended to be interpreted in any limited or restrictive manner simply because it is being used in conjunction with a detailed description of certain specific embodiments of the inventions. In addition, embodiments of the inventions can comprise several novel features and no single feature is solely responsible for its desirable attributes or is essential to practicing the inventions herein described.

### II. Baitcasting reel seat

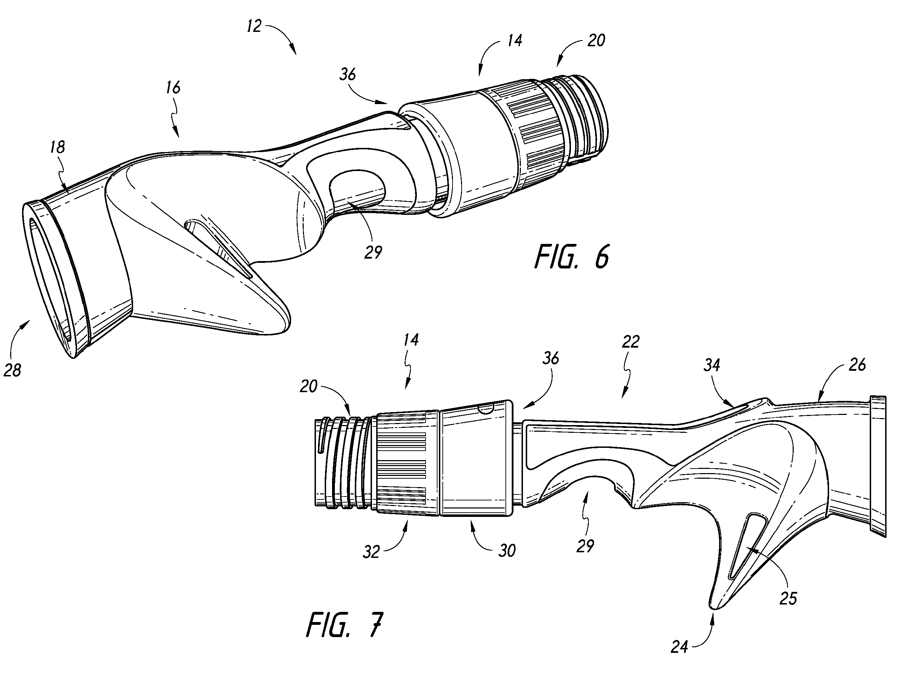

In some embodiments, such as depicted in Figs. 6-12, the reel seats disclosed herein may be configured to receive and secure a baitcasting reel. Such embodiments or similar embodiments may also be configured to receive and secure spincasting reels. In some embodiments, the reel seat 12 comprises a main body portion 16 and a securing portion 14. In some embodiments, the main body portion includes some or all of the securing portion. The main body portion 16 may comprise a threaded region 20, a reel foot receiving area 22, a trigger 24, a longitudinal cavity 28, and a recessed receiving portion 26 which is configured to receive a gripping member 18. As shown in Figs. 6-12, the main body portion 16 can define a first end and a second end. In some embodiments, the first end is fixed to the gripping portion 19. In some embodiments, the first end can be fixed directly to a handle portion of a fishing pole 1. The second end of the main body portion 16 can be adjustable. In some embodiments, the second end can be configured to receive a foregrip of a plurality of different foregrips. As discussed below, the second end can include the threaded region 20.

The securing portion 14 can comprise a first insert portion and a second insert portion. The first insert portion can be configured to receive a first portion of the fishing reel arm. The second insert portion can be configured to receive a second portion of a fishing reel arm. The first insert portion can be disposed closer to the first end of the main body portion 16 than the second insert portion. The first insert portion can be fixed relative to the main body portion. In some embodiments, the first insert portion can be configured to translate longitudinally along the main body portion 16 of the reel seat 12. The first insert portion can be positioned opposite the second insert portion. The second insert portion can be configured to translate longitudinally along the main body portion 16 of the reel seat 12. In some embodiments, the securing portion may comprise an adjustable sleeve 30 and a securing nut 32. The main body portion 16 may be constructed primarily from aluminum, graphite, a polymer material, or other materials. The securing portion 14 may be constructed from the same material as the main body portion, or may be constructed from another material.

The main body portion 16 comprises an interior longitudinal cavity 28 configured to receive the handle portion of the fishing pole 1. The longitudinal cavity 28 can extend from the first end of the main body portion to the second end of the main body portion. In some embodiments, the interior longitudinal cavity 28 may be substantially cylindrical in shape. For example, in some embodiments, the interior cavity 28 may have an interior diameter substantially similar in size as the handle portion of a compatible fishing pole to enable instillation of the reel seat on the fishing pole. In some embodiments the interior cavity 28 may have a diameter larger than the handle portion of a compatible fishing pole handle to receive a variety of sizes of fishing poles. In some embodiments the longitudinal cavity 28 is substantially parallel, in other embodiments the cavity may be tapered to accommodate particular fishing pole handles and fit securely. In some embodiments, a tapered longitudinal cavity may advantageously aid in positioning the reel seat in an appropriate location along the handle of a reel seat. In some embodiments, the longitudinal cavity 28 may have one or more cut out portions 29 which expose a portion of a fishing pole when the reel seat is mounted on the fishing pole. Preferably, one or more cut-out portions 29 may be positioned such that an angler using the fishing pole with attached reel seat may grip the reel seat when fishing in a way enabling the angler to directly feel the fishing pole. This may enable direct transmission of vibrations from the fishing pole to the angler while the angler is also able to substantially grip a comfortable gripping member 18 attached to the reel seat 12. In some embodiments, the main body portion may be split into two distinct pieces to provide this feature as well as to reduce the overall weight of the reel seat.

In some embodiments, the main body portion 16 of a reel seat 12 configured to secure a baitcasting reel may also include a finger portion. In some embodiments, the fishing reel seat may include the plurality of finger portions configured to accept one or more fingers of an angler's gripping hand. For example, as illustrated in Fig. 7, the finger portion can include a first finger portion and a second finger portion of the plurality of finger portions. The first finger portion can include a trigger 24. The trigger 24 can be configured to receive a first finger of an angler's hand. In some embodiments, the trigger 24 can be configured to receive multiple fingers of an angler's hand. The trigger 24 may be positioned on the reel seat 12 such that when a compatible fishing reel is secured, an angler may naturally grip the trigger portion with one or more fingers of the anglers gripping handAs shown in Figs. 6-12 for example, the trigger 24 can extend downwardly from the main body portion. The trigger 24 can extend below a periphery of the main body portion. In some embodiments, the trigger 24 can extend a distance below a periphery of the main body portion approximately 2/3 the length of an outer diameter of the main body portion 16.

In some embodiments, the trigger 24 may be a solid feature. In some embodiments, the trigger 24 may instead be a hollow or partially hollow feature instead of a solid feature. For example, as shown in Fig. 7, the trigger 24 includes a hollow portion 25. In various embodiments of the reel seats as disclosed the trigger may comprise hollow portions of a variety of shapes and sizes. Including a hollow portion of the trigger may reduce the overall weight of the reel seat as well as the materials required to manufacture the reel seat. In addition, hollow portions may be aesthetically pleasing. In some embodiments, the second finger portion can include the cut-out portion 29. As shown in Fig. 7, the cut-out portion 29 can be configured to receive a second finger of an angler's hand.

The main body portion 16 of a reel seat as disclosed comprises securing portion 14 including a foot receiving area 22 configured to receive a foot portion of a compatible fishing reel. In some embodiments, the foot receiving area 22 of a reel seat 12 may be substantially flat portion with a first insert portion, for example a cutout sleeve 34, on one end facing a second insert portion, for example an adjustable sleeve 30, on the other end. In some embodiments, the cutout sleeve and the adjustable sleeve may be on opposite ends of the reel seat. In some embodiments other insert portions or combinations of insert portions may be used to receive a fishing reel. For example, the reel seat includes to adjustable sleeves, a cutout sleeve and a clamp, a clamp and an adjustable sleeve, or other combinations. The flat portion may be similar in shape and size to the foot of a compatible fishing reel. The cutout sleeve 34 may be shaped to receive one side of a fishing reel foot. In some embodiments the cutout sleeve may be tapered to securely fasten fishing reels with feet of a variety of sizes.

In some embodiments, opposite from the cutout sleeve 34 there may be an adjustable sleeve 30 aligned to receive the other end of the fishing reel foot. The adjustable sleeve 30 may have an inner geometry substantially the same size and shape as the external geometry of the main body portion of the reel seat. The adjustable sleeve 30 may include a foot receiving portion configured to receive one end of a fishing reel foot. In some embodiments, the adjustable sleeve 30 may include a portion configured to extend radially beyond the outer geometry of the main body portion 16 such that there is a gap between the adjustable sleeve 30 and the main body portion 16 that creates a cavity 36 which may be configured to accept a portion of the foot of a compatible fishing reel. The cavity 36 of the adjustable sleeve 30 may be substantially similar in size to the cutout sleeve 34 of the reel seat. In some embodiments, the reel seat comprises two adjustable sleeves 30 with cavities 36 facing one another instead of providing a cutout sleeve 34 and an adjustable sleeve 30.

In some embodiments, the adjustable sleeve 30 may also include an alignment ridge 38 configured to align the adjustable sleeve 30 with the cutout sleeve 34. The alignment ridge 38 is configured to track in an alignment recess 40 located on the main body portion 16 of the reel seat 12. As shown in the figures, the ridge is placed radially opposite the cavity 36, however, the ridge 38 may be placed elsewhere on the adjustable sleeve. In some embodiments, the adjustable sleeve 30 may not have an alignment ridge 38 or may have more than one alignment ridge 38. In some embodiments, the adjustable sleeve 30 has an alignment recess instead of an alignment ridge. In such embodiments, the main body portion of the reel seat may include an alignment ridge instead of an alignment recess. In some embodiments, the adjustable sleeve is constructed from a single material. In some other embodiments, the adjustable sleeve is constructed from more than one material. For example, the adjustable sleeve 30 may be constructed primarily from a plastic material, but may comprise an aluminum support ring for additional support. In some embodiments, a support ring may be constructed from other materials.

The adjustable sleeve may be adjusted nearer or further from the cutout sleeve using a securing nut 32. The securing nut 32 is configured to fit the threading on the threaded region 20 of the main body portion 16. In some embodiments, the securing nut 32 may be attached to the adjustable sleeve 30, such that the adjustable sleeve 30 moves along the main body portion 16 in one direction when the securing nut 32 is turned clockwise and in the other direction when the securing nut 32 is turned counter-clockwise. In some embodiments, the securing nut 32 may not be attached to the adjustable sleeve 30, but may be configured to secure the adjustable sleeve 30 over one part of a fishing reel foot. The securing nut 32 and the adjustable sleeve 30 may be constructed from the same material or from different materials. In some embodiments a foregrip 6 of the fishing pole 1 is configured such that the securing nut 32 may fit over at least a portion of the foregrip 6. This may enable a larger fishing reel to fit without requiring a larger reel seat. For example, if the securing nut 32 did not fit over the foregrip 6, the distance between the cutout sleeve 34 and the adjustable sleeve 30 would be limited by the length of the reel seat 12. However, if the securing nut fits over a first portion of the foregrip, the space between the cutout sleeve 34 and the adjustable sleeve 30 is extended such that it is limited by the length of the reel seat 12 and the additional area 33 on the foregrip 6 over which the securing nut 32 fits.

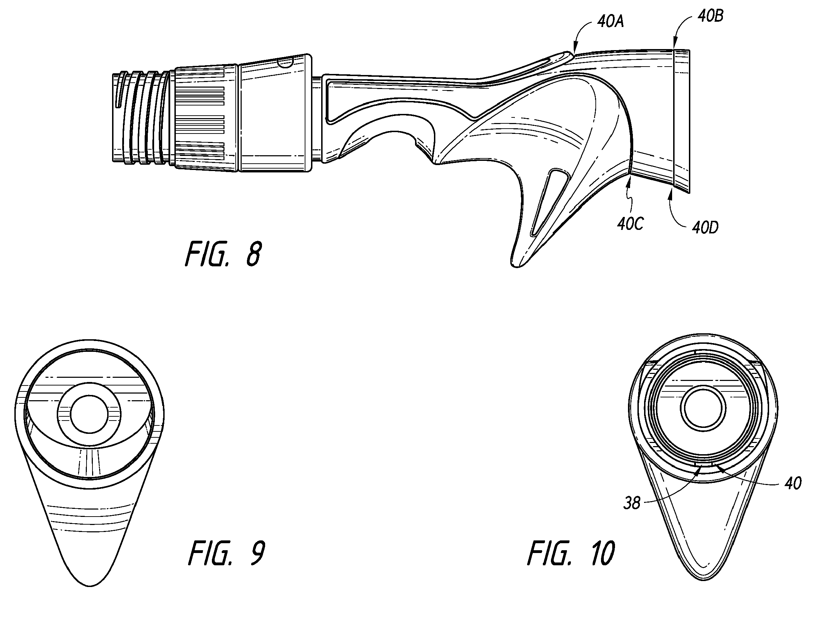

The main body portion 16 of the reel seat 12 may also include a recessed area 26 configured to receive a gripping member 18. The recessed area 26 may be positioned on the main body portion 16 in a manner that will present the gripping member 18 to an angler's hand when an angler is using the fishing pole. The recessed area 26 may also be located around the main body portion 16 in a manner that provides an aesthetically pleasing configuration. As shown in the Fig. 7 and 8, in some embodiments, the recessed area 26 is of a depth D substantially the same as the thickness T of a gripping material 18 it is configured to receive. This provides a smooth transition from portions of the reel seat with gripping material to those without gripping material after the gripping material is attached to the reel seat. For example, as shown at points 40A, 40B, 40C, and 40D of Fig. 8, the transition from the gripping member 18 to corresponding non-recessed portions of the main body portion 16 of the reel seats. The recessed area 26 may be of a depth of about between 1mm and 2mm. In some embodiments, the recess may be shallower or deeper depending on the thickness of the material to be attached or a thickness that provides desired grip characteristics, such as transmission of vibrations or comfort, for example. The gripping member 18 preferably provides a comfortable and/or aesthetically pleasing surface on the main body portion 16 in contrast to the rigid and structurally robust main portion that must securely support the reel on the pole.

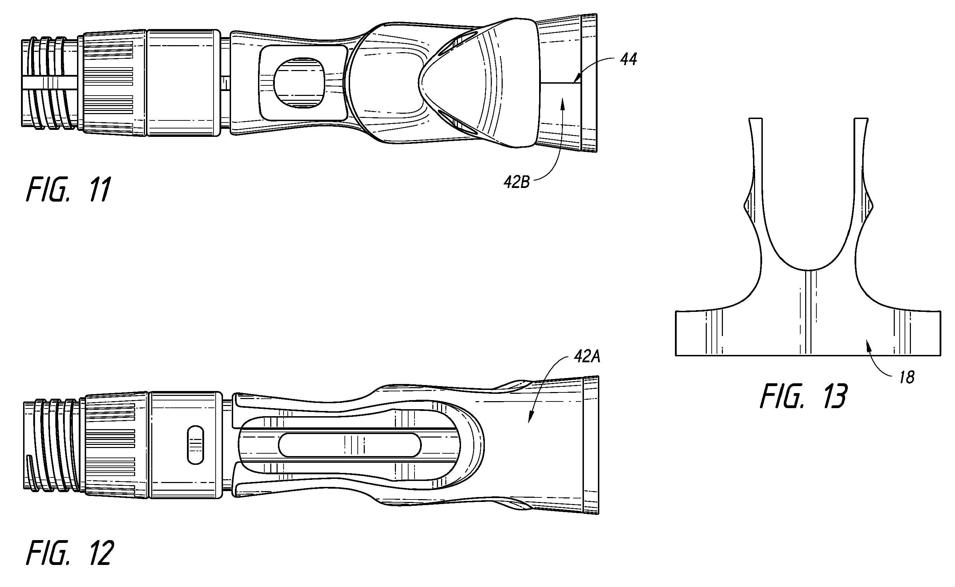

In some embodiments, for example, as depicted in Figs. 6-12, the recessed area 26 can include a thumb portion. In some embodiments, the thumb portion is shaped to receive a gripping member 18 to present a gripped surface in a natural resting position for an angler's thumb. For example, as depicted at area 42A of Fig. 12, the natural resting place for an angler's thumb is presented to the angler. As illustrated in Fig. 12, the thumb portion can be approximately less than half the length of the main body portion 16. In some embodiments, the thumb portion is less than half of the length of the securing portion. In some embodiments, the recessed area 26 is also configured such that the gripping member 18 presents a gripping surface around the reel seat 12 in a configuration which provides grip to around the handle portion of the pole where an angler would hold the handle. For example, as depicted at area 42B of Fig. 11, the gripping member 18 fits the recessed area 26 such that an angler may grip the handle on the gripping surface. In some embodiments, the recess may be configured such that a gripping portion may be provided on the trigger, along the bottom of the reel seat, or on any other portion of the reel seat.

As illustrated in Figs. 6-12, the thumb portion is disposed on a first side of the main body portion 16 of the reel seat 12. The first side of the main body portion can be disposed above a longitudinal axis of the main body portion 16 running through the center of the reel seat 12 from the first end to the second end of the main body portion 16. The thumb portion can extend from the first end of the main body portion 16 towards the second end. In some embodiments, the thumb portion is parallel to the longitudinal axis. In some embodiments, the thumb portion extends from the first side towards a second side of the main body portion. As illustrated in Figs. 6-12, the thumb portion can be positioned opposite the finger portion. For example, the finger portion can be positioned on the second side of the main body portion 16. The second side of the main body portion 16 can be disposed below the longitudinal axis of the main body portion 16. The second side of the main body portion 16 can be disposed opposite the first side of the main body portion. The thumb portion can extend from the first end of the main body portion 16 over a portion of the finger portion. In some embodiments the thumb portion and the finger portion do not overlap. Fig. 13 depicts an embodiment of the shape of a gripping member 18 configured to be attached to the main body portion 16 of the reel seat 12 as shown in the Figs 6-12. In some embodiments, the gripping member 18 is of a different shape to match a different recessed area 26 or a different main body portion 26 of a reel seat. In some embodiments, an outer periphery of the gripping member can correspond to the recessed area shape. As shown in the Fig. 13, the gripping member 18 may be manufactured in a flat shape which can then be wrapped around the reel seat 12 or otherwise shaped to fit the design of the main body portion 16. As shown in Fig. 13, the gripping member 18 can include a base portion and one or more extension portions. The base portion can wrap around the main body portion 16 of the reel seat 12 at a location near the first end of the main body portion. In some embodiments the base portion wraps around only a portion of the main body portion. In some embodiments, the base portion wraps around the main body portion 16 and forms a seam 44. In some embodiments the extension portions of the gripping member 18 can extend from the base portion towards the second end of the main body portion. In some embodiments, the extension portions extend along the main body portion perpendicular to a vertical axis of the main body portion. In some embodiments, the extension portions extend along the main body portion angled inwardly. In some embodiments, the extension portions extend along a substantial length of the main body portion 16. Portions of the extension portions can be disposed above the longitudinal axis of the main body portion 16. In some embodiments, the extension portions are entirely disposed above the longitudinal axis of the main body portion 16.

In some embodiments, the gripping member 18 may be manufactured by methods which form a three dimensional gripping portion. The gripping member 18 can be configured to be secured within the recessed area 26. In some other embodiments, the gripping member may be manufactured such that it is affixed to the reel seat during manufacturing. For example, the gripping member 18 may be made from a material deposited directly into the recessed area 26. In some embodiments, the gripping member 18 comprises a material with different characteristics than a material forming the main body portion 16 adjacent to the recessed area 26. In some embodiments, the recessed area 26 and a corresponding gripping member may be configured in a shape that creates a gripping surface on the trigger 24 of the reel seat in addition to or alternative to the areas shown in Figs. 6-12. In some embodiments, the adjustable sleeve 30 and/or the securing nut 32 may also be configured with a recessed area for receiving a gripping member.

As discussed above, the recessed area 26 and/or the gripping member 18 can be of different shapes to correspond to a differently shaped main body portion 26 of the reel seat 12 or to cover different portions of the main body portion 1026. As illustrated in Figure 7, for example, the recessed area 26 can cover a portion of the main body portion 26. In some embodiments, the first recessed area 26 extends over at least a portion of the first insert portion. In some embodiments, the recessed area 26 covers at least 1/3 of a surface area of the main body portion. In some embodiments, the recessed area 26 covers at least 1/10, 1/9, 1/8, 1/7, 1/6, 1/5, 1/4, and/or 1/2 of the surface area of the main body portion. In some embodiments, the recessed area 26 covers the entire main body portion. In some embodiments a majority of the recessed portion is disposed above the longitudinal axis of the main body portion 16.

### III. Spinning reel seat

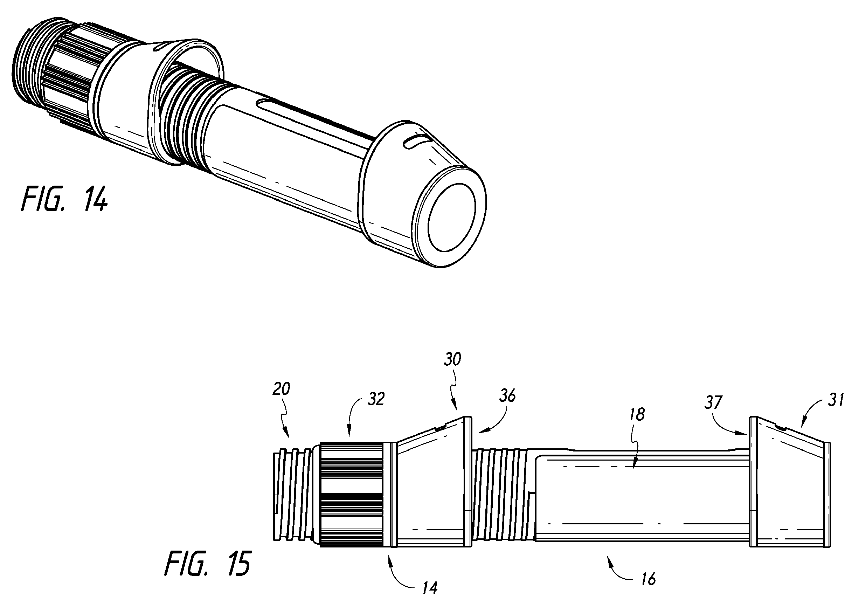

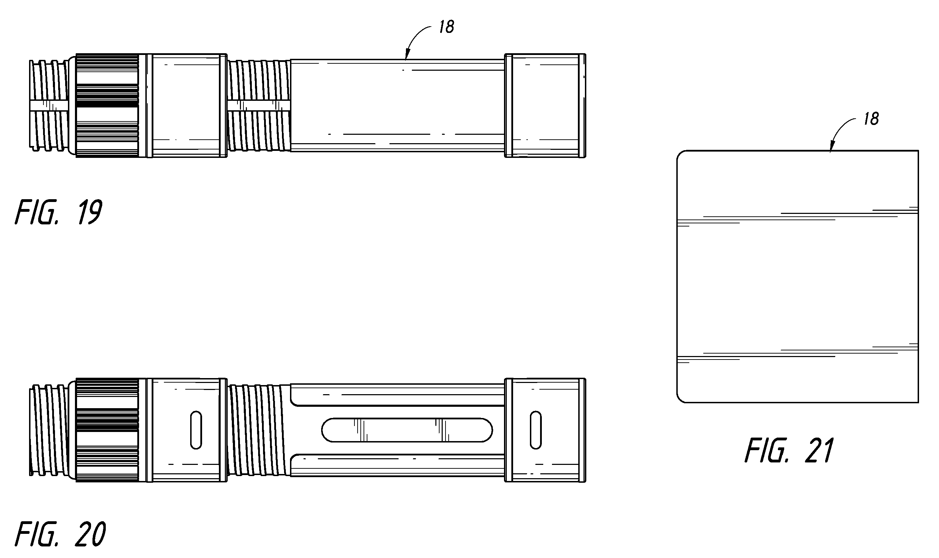

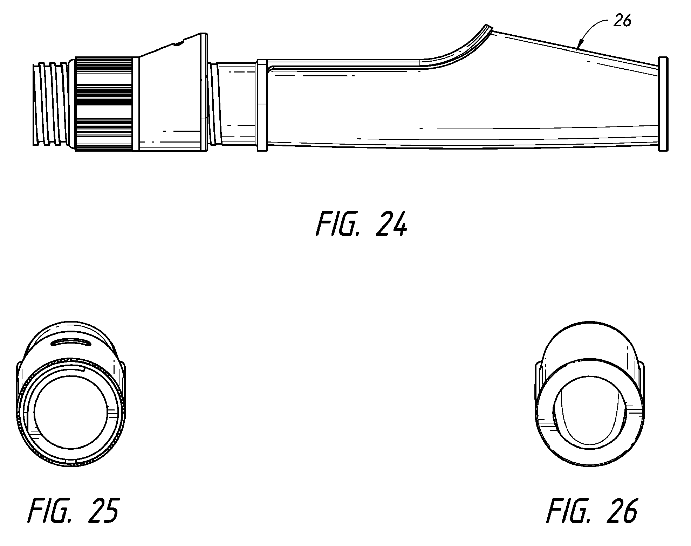

In some embodiments, a reel seat as disclosed herein may be configured to receive a spinning reel. The embodiments configured to receive a spinning reel, like other embodiments disclosed herein, may also accommodate fly rods in some embodiments. Figs. 14-21 depict a reel seat configured to receive a spinning reel as implemented in some embodiments and Figs. 24-29 depict a reel seat configured to receive a spinning reel as implemented in some other embodiments. Figs. 14-29 illustrate embodiments of the reel seat that are similar or identical to the reel seat depicted in Figs. 1-13 discussed above in many respects. For example, the reel seats depicted in Figs. 14-29 can include a main body portion 16 and a securing portion 14. In some embodiments, the main body portion includes the securing portion. The main body portion 16 may comprise a threaded region 20, a longitudinal cavity 28, and a recessed grip receiving portion 26 which is configured to receive a gripping member 18. The gripping member 18 can be configured to provide improved gripping performance while providing transmission of vibrations through the gripping member enabling an angler to accurately feel movement of the fishing pole. The reel seats illustrated in Figs. 14-29 can include any one, or any combination, of the features of the reel seat described above.

As discussed above, in some embodiments, a reel seat includes a main body portion 16 and securing portion 14. As shown in Figs. 14-29, the main body portion 16 can define a first end and a second end. In some embodiments, the first end is fixed relative to the main body portion 16. In some embodiments, the first end can be fixed directly to a handle portion of a fishing pole 1. The second end of the main body portion 16 can be adjustable. In some embodiments, the second end of the main body portion is fixed. In some embodiments, the second end can be configured to receive a foregrip or a plurality of different foregrips. The second end can include the threaded region 20.

The securing portion 14 can comprise a first insert portion and a second insert portion. The first insert portion can be configured to receive a first portion of the fishing reel arm. The second insert portion can be configured to receive a second portion of a fishing reel arm. The first insert portion can be disposed closer to the first end of the main body portion 16 than the second insert portion. The first insert portion can be fixed relative to the main body portion. In some embodiments, the first insert portion can be configured to translate longitudinally along the main body portion 16 of the reel seat 12. The first insert portion can be positioned opposite the second insert portion. The second insert portion can be configured to translate longitudinally along the main body portion 16 of the reel seat 12.

In some embodiments, the securing portion 14 may include an adjustable sleeve 30 and a securing nut 32. In some embodiments, the securing portion 14, the adjustable sleeve 30 and the securing nut 32 may be the same or similar to those disclosed above in reference to embodiments of reel seats configured to receive baitcasting reels. As illustrated in Figs. 14-16, the adjustable sleeve 30 can have a length of less than ½ of the main body portion. In some embodiments, the length of the adjustable sleeve 30 is approximately ¼ the length of the main body portion 16. The adjustable sleeve 30 can include a first side and a second side. The first side of the adjustable sleeve 30 can be tapered towards the second end of the main body portion 16. In some embodiments the second side of the adjustable sleeve 30 is substantially parallel to the longitudinal axis of the main body portion 16. In some embodiments, the second side of the adjustable sleeve 30 is substantially parallel to the second side of the main body portion 16. As illustrated in Figs. 14-16, the second insert portion of the securing portion may form a cavity 36 configured to receive a second end of a foot of a fishing reel. In some embodiments, the securing portion 14 may be larger or smaller for implementations configured to receive spinning reels compared to those configured to receive baitcasting reels described above. In some embodiments, the cavity 36 formed between the adjustable sleeve 30 and the main body portion 16 may be in a different shape or size than used in embodiments configured to receive a baitcasting reel.

In some embodiments, as shown in the embodiments depicted in Figs. 14-20, a reel seat may comprise a second sleeve 31 configured to receive a first end of the foot of a fishing reel. In some embodiments, the first insert portion of the securing portion may comprise a second sleeve 31 configured to receive a first end of the foot of a fishing reel. In some embodiments, the first insert portion of the securing portion may form a cavity 37 configured to receive a first end of a foot of a fishing reel. In some embodiments, the second sleeve 31 may be the same or similar in shape and size as adjustable sleeve 30. As illustrated in Figs. 14-16, the second sleeve 31 can include a first side and a second side. The first side of the second sleeve 31 can be tapered towards the first end of the main body portion 16. In some embodiments the second side of the second sleeve 31 is substantially parallel to the longitudinal axis of the main body portion 16. In some embodiments, the second side of the second sleeve 31 is substantially parallel to the second side of the main body portion 16. In some embodiments, the second sleeve 31 may be part of the main body portion 16 or may be a separate piece permanently attached to the main body portion 16. In some embodiments, the second sleeve 31 is adjustable and may be adjusted independently to secure a fishing reel. The second sleeve 31 may be aligned with the adjustable sleeve 30 such that the foot of a fishing reel may be secured between the cavity 36 formed by the adjustable sleeve 30 and the cavity 37 formed by the second sleeve 31.

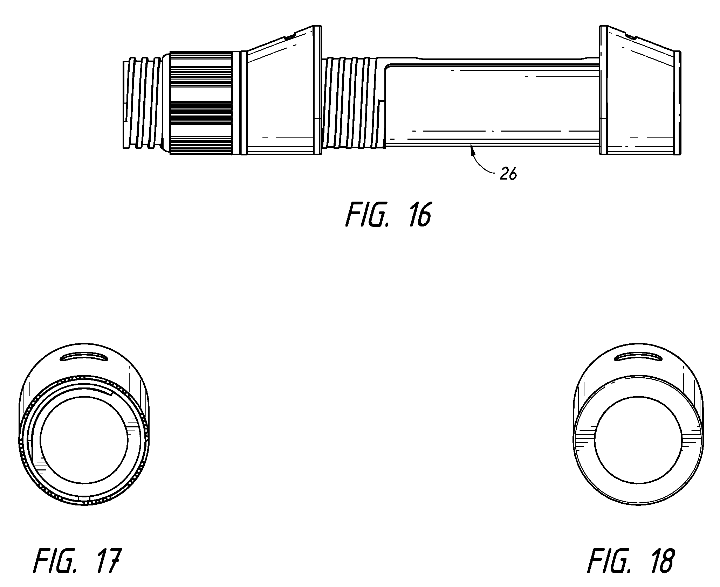

In some embodiments, the main body portion 16 of the reel seat 12 may comprise a recessed area 26 configured to receive a supplemental gripping member 18. As shown in Figs. 16 and 24 the recessed area 26 may be positioned on the reel seat in a position an angler would naturally hold a fishing pole while angling. In some embodiments, the securing portion 14 can be positioned on a first side of the main body portion 16. In such embodiments, the recessed portion can extend from the first side of the main body portion 16 to the se second side of the main body portion opposite the first side. For example, the recessed area 26 may be configured to receive a gripping member 18 such that the palm of the angler's hand comes in contact with the gripping member 18 while performing casting and retrieving actions with a fishing pole. In some embodiments, the main body portion 16 includes a thumb portion. In some embodiments, the second sleeve 31 can include the thumb portion. The thumb portion can be disposed along a first side of the second sleeve 31. The thumb portion can be substantially flat. In some embodiments, the thumb portion can be tapered towards the first end of the main body portion.

In some embodiments, as shown in Fig. 16, the recessed portion is configured to receive a gripping member 18 that wraps partially around an exterior portion of the reel seat 12. In some embodiments, the gripping member may not wrap entirely around the reel seat so that the foot of an attached fishing reel is secured against a solid portion of the reel seat 12 configured to receive the foot of the fishing reel. In some embodiments, the recessed portion 26 may be configured to receive a gripping member 18 that wraps around the reel seat 12. The gripping member 18 may be secured to the main body portion 16 such that the gripping member 18 is secured within the recessed area 26. This may provide the ability for the gripping member 18 to wrap around the reel seat 12 and connect one end to another at a seam to create a secure connection. In some embodiments, only a portion of the recessed area 26 may wrap completely around the reel seat 12.

As illustrated in Figures 14-19, the recessed area 26 can extend various lengths along the main body portion 16. For example, the recessed area 26 can extend a substantial length along the main body portion 16 from the first end towards the second end of the main body portion. In some embodiments, the recessed area 26 extends a substantial length along the main body portion 16 from the second sleeve 31 towards the second end. In some embodiments the recessed area 26 extends approximately ½ a length of the main body portion 16. In some embodiments, the recessed area 26 extends approximately ¾ the length of the main body portion 16. In yet other embodiments, the recessed area 26 extends approximately ¼ the length of the main body portion 16.

In some embodiments, the recessed portion may be 0.1 mm-1 mm in depth. In some embodiments, the recessed portion may be 1 mm-2 mm in depth. In some embodiments, the depth of the recessed area 26 may be the same or substantially similar through the whole recessed area, in some embodiments, different portion of the recessed area 26 may have different depths. This may, for example, provide the best performance features for different portions of the reel seat. For example, a gripping member 18 may have different thicknesses to match the depth of the recessed area 26. The gripping member may then provide better gripping and comfort on some portions of the reel seat, while providing better vibration detection through other portions of the reel seat.

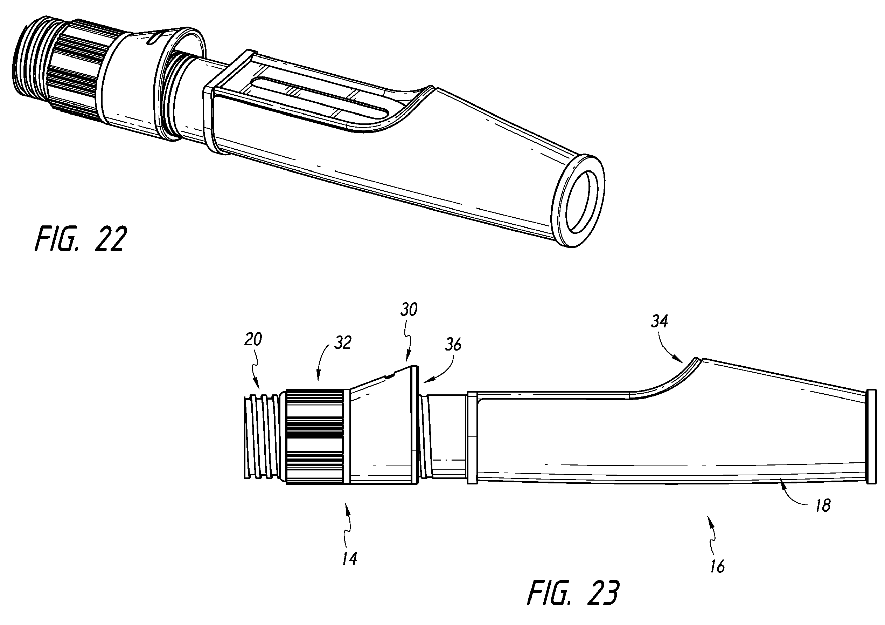

In some embodiments, as shown in the implementations depicted in Figs. 22-29, the foot receiving area of a reel seat 12 may include a substantially flat portion. The foot receiving area of reel seat 12 may include a cutout sleeve 34 on one end facing the adjustable sleeve 30 on the other end. Thus, as shown, in some embodiments the securing portion 14 can have a fixed end and an adjustable end.

The flat portion may be similar in shape and size to the foot of a compatible fishing reel. The cutout sleeve 34 may be shaped to receive one side of a fishing reel foot. In some embodiments the cutout sleeve 34 may be tapered to securely fasten fishing reels with feet of a variety of sizes. In some embodiments, the cutout sleeve 34 can include the first insertion portion of the securing portion. The cutout sleeve 34 can be configured to receive a first end of the foot of a fishing reel.

In some embodiments, as shown in Figs. 22-29, a portion of the recessed area 26 extends around the reel seat 12, while other portions of the recessed area 26 do not extend around the reel seat. In some embodiments, the recessed portion 26 can include a thumb portion along a first side of the main body portion 16. In some embodiments, the gripping member 18 can include the thumb portion along a first side of the main body portion 16. As shown in Figs. 22-29, the thumb portion can be disposed along a first side of the gripping member 18 towards the first end of the main body portion 16. The thumb portion can extend from the first end towards the second end of the main body portion 16. The thumb portion can be tapered upwardly away from the first end towards the second end of the main body portion. In some embodiments, the thumb portion is substantially flat. As illustrated in Figs. 22-29, the thumb portion can extend various distances along the main body portion 16. For example, the thumb portion can extend a length approximately equal to a length of the flat portion. In some embodiments, the thumb portion can extend a length approximately ½ the length of the recessed area 26 and/or the gripping member 18. In some embodiments, the thumb portion can extend a length of less than approximately ½ the length of the recessed area 26 and/or the gripping member 18. The recessed area 26 and/or gripping member 18 can extend substantially the length of the main body portion 16. In some embodiments, the recessed area 26 extends approximately 1/2 the length of the main body portion 16. In some embodiments, the recessed area 26 extends approximately ¾ the length of the main body portion 16.

As illustrated in Figs. 22-29, a second side of the main body portion 18 can be substantially flat. In such embodiments, the second side of the main body portion 18 can be approximately parallel to the flat portion.

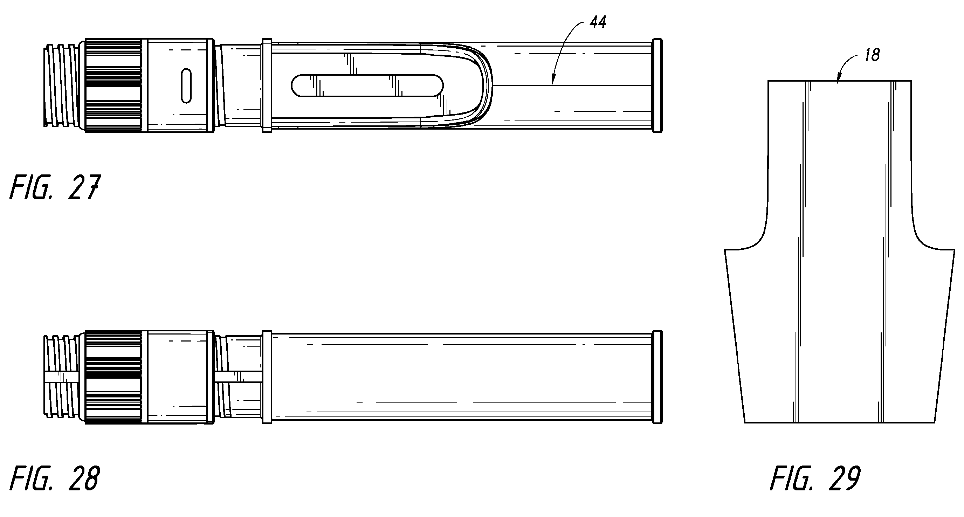

In some embodiments, the gripping member 18 may be adhered, bonded, or otherwise attached to the surface of the recessed area 26 of the reel seat 12. In addition, the ends of the gripping member 18 may be attached at a seam 44. In some embodiments, the gripping member 18 may be manufactured as a flat panel as shown in Fig. 29. The panel may be configured in a shape to fit the recessed area 26. In some embodiments, the panel may be of a thickness substantially similar to the depth of the recessed area 26. In some embodiments, the panel is of a substantially uniform thickness. In some other embodiments, the panel may have varying thicknesses such that different regions of a gripping surface of the gripping member 18 provide different advantageous properties for an angler.

### IV. Gripping Member

In some embodiments, the gripping member attached to a reel seat, such as the baitcasing reel seats described above and depicted in Figs. 6-13, and the embodiments of spinning reel seats described above and depicted in Figs. 14-29 may be made of a variety of materials to provide the performance characteristics desired by an angler. For example, in some embodiments, the gripping member may provide a grip that is light in weight and reduces or eliminates the absorption of water. Some embodiments provide a feeling of tackiness while also minimizing the weight/density of the grip. Some embodiments of the grips described herein include a resilient base or underlisting, which may be ethylene-vinyl-acetate (EVA), and a gripping portion including an EVA inner or backing layer. In some embodiments, the gripping member can include multiple layers. For example, in some embodiments, the gripping portion can include a combination polyurethane and thin fabric layer that is joined to the EVA inner layer. The fabric layer can be impregnated with polyurethane. In some embodiments, the polyurethane further includes a woven fabric mesh layer disposed outside the impregnated fabric layer.

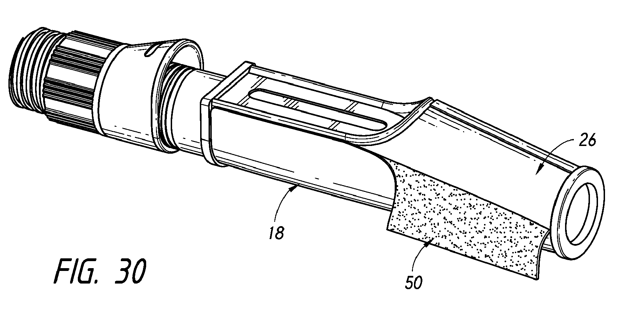

In some embodiments, the gripping member 18 is shaped to generally correspond with the recessed area 26 of a reel seat 12 when applied thereto. In some embodiments, as shown in Fig. 30, a gripping member 18 in the form of a panel (e.g., as shown in Fig. 29) may be folded or wrapped around the recessed area 26 of a reel seat 12. Folding or wrapping a flat panel around the reel seat may form a seam substantially parallel to the longitudinal axis of the reel seat. In some embodiments, the seam may enable various material layers of the gripping member 18 to be joined to similar material layers. In some embodiments, some edges of the gripping member 18 may be skived. For example, the edges of gripping member 18 which will meet at a seam 44 may be skived so as to overlap along the seam 44 with like layers generally contacting like layers.

In some embodiments, such a seam 44 is stitched closed with the stitches preferably extending through the gripping member 18. In some embodiments, the gripping member 18 may comprise various layers. In such embodiments, the stitching at a seam may extend through each of the layers of the gripping member 18 or may extend only through some of the layers. For example the gripping member 18 may comprise a polyurethane layer and an EVA layer. The polyurethane layer may or may not include a polyurethane/felt layer. In some embodiments, the stitching only extends through the polyurethane or polyurethane/felt layer and not extend through the EVA layer. In some embodiments, the gripping member may be stitched inside out with the outer surface facing inwards and, after stitching the seam 44, the gripping member may be reversed as it is applied to the reel seat 12 such that, on the finished reel seat 12, the outer surface is facing outwards. For example, the outer surface of the gripping member 18 may comprise a polyurethane material and the inner surface of the gripping member 18 may comprise an EVA material. The layers may be adhered, bonded, or otherwise attached, for example, by applying adhesive to the inside of the outer layer, to the outside of the inner layer, or to bother layers.

In some embodiments, an adhesive is sprayed, painted, or otherwise applied onto the recessed area 26 of the reel seat 12, the inner surface 50 of the gripping member 18 or both the recessed area 26 and the inner surface 50 of the gripping member. As the gripping member 18 is folder, wrapped or otherwise applied to the recessed area 26 the adhesive may attach the gripping member to the reel seat in a secure manner.

In some embodiments, one or more layers of the gripping member 18 comprise EVA to reduce the weight and lower the density of the finished reel seat and to provide a cushioning material that is less inclined to absorb and hold water or other fluids. This is particularly useful in fishing pole applications, for example when the pole is dropped into the water, as the lightweight/low density griping member 18 according to embodiments of the present invention will preferably float even when wet. In some embodiments, an EVA layer may be between approximately 0.5 and 1.5 millimeters thick. In some embodiments, an EVA layer may be between approximately 0.75 and 1.25 millimeters thick. In a preferred embodiment, an EVA layer may be approximately 1 millimeter thick. In some embodiments, an EVA member may be between approximately 0.1 and 0.5 millimeters thick.

In some embodiments, an outer surface of the gripping member 18 may comprise a polyurethane material. In some embodiments, the polyurethane material may be manufactured as a thin non-woven fabric layer that is saturated with polyurethane, by, for example, dipping the thin fabric layer into a polyurethane bath. The polyurethane is preferably coagulated to form one or more closed cells or pores. The non-woven fabric layer has an outer surface and an inner surface and may be fabricated of suitable materials such as nylon, cotton, polyester, or the like and may be felt. In some embodiments, the fabric layer may be compressed to reduce its thickness prior to the application of polyurethane thereto. In some embodiments, the compression also enhances the rigidity of the fabric layer. In some embodiments the compression also spreads the non-woven fibers to enhance the penetration of the polyurethane into the thin fabric layer. Increasing the amount of polyurethane penetration and saturation into the thin fabric layer reduces the amount of space available for water and other fluids to soak into and become trapped within the gripping member 18. This is particularly useful in fishing pole applications. In some embodiments, the thin non-woven fabric layer is between approximately 0.1 and 0.5 millimeters. In some embodiments, the thin non-woven fabric layer is between approximately 0.3 and 0.4 millimeters thick. In some embodiments, the thin non-woven fabric layer is between approximately 0.3 and 0.35 millimeters thick. In some embodiments, the thin fabric layer is approximately 0.35 millimeters thick.

In some embodiments, not shown, additional liquid polyurethane can be added to the top surface of the uncoagulated polyurethane that coats the thin fabric sheet after the sheet is directed out of a polyurethane bath and before the polyurethane is coagulated. The second polyurethane can include one or more different characteristics from the first polyurethane to provide contrast on the gripping member 18 and they may be coagulated together to form a contiguous polyurethane layer with different properties. For example, the second polyurethane can include a different color, durometer or level of tackiness. In some embodiments, a coating layer of polyurethane or other polymer may be included on the outer surface of the gripping member 18 for enhanced water resistance.

In some embodiments, once formed, the gripping member may be cut into a suitable shape corresponding to a recessed area 26 of a compatible reel seat 12. Furthermore, a pattern may be imprinted on the surface of the gripping member to provide enhanced friction to provide additional gripping ability to the reel seat. In some embodiments, the edges of the gripping member 18 may be skived in a parallel fashion such that, when the gripping member 18 is folded or wrapped around the recessed area 26 of the reel seat 12, the skived edges overlap with like layers in contact with and glued to like layers along an angled seam 44. In some embodiments, the side edges are skived in an anti-parallel fashion such that, when wrapped around the recessed area 26 of the reel seat 12, the seam can be stitched with the outer surfaces at or near the side edges contacting each other.

In some embodiments, the thickness of the gripping member 18 corresponds generally to the depth of the recessed area 26 to facilitate the creation of a smooth transition from the gripping member 18 to other portions of the reel seat 12. In some embodiments, the thickness of the gripping member 18 may vary to provide various performance benefits to different portions of the reel seat. In such embodiments, the edges of the reel seat may correspond in thickness to the depth of the recessed area 26 to facilitate the creation of a smooth transition from the surface of the gripping member 18 to the reel seat 12.

In some embodiments, the gripping member 18 may be constructed from different materials than described above. For example, the gripping member 18 may be polyurethane injection molded into a shape corresponding to a recessed area 26 of a compatible reel seat 12. In some embodiments, the gripping member 18 may be formed on the recessed area 26. For example, the gripping member 18 may be formed by depositing a resilient material into the recessed area 26 to form a grip on the reel seat. In some embodiments the gripping member 18 may be made out of other materials, such as, layered polyurethane and EVA without a felt layer, a single polyurethane layer, natural materials including leather, fabrics, cork, wood, rubber, or other natural materials or products, other natural or synthetic polymer materials, or any other resilient material that provides desirable performance or aesthetic characteristics for anglers.

In some embodiments, the gripping member 18 may be removed from a compatible reel seat 12 and replaced with another gripping member 18. This may enable an angler to fix problems occurring from a worn or damaged grip on the reel seat 12. In some embodiments, this may also enable an angler to change the aesthetic appearance of a reel seat 12 or to change performance characteristics of the gripping member 18 to suit the angler's preferences or a particular activity's needs. For example, if an angler is outfitting a pole with a new reel for a different type of fishing, the angler may prefer to use a reel seat with different gripping characteristics than with a previously used reel.

### V. Fishing Pole Application

The reel seats disclosed herein are preferably attached to compatible fishing poles. For example, as shown in Fig. 1, a reel seat 12 as disclosed herein may be attached to the handle portion of the fishing pole 1. To attach the reel seat to the fishing pole 1, the handle portion of the shaft 2 of the fishing pole may be inserted into the longitudinal cavity 28 of the reel seat 12. In some embodiments the shaft 2 may be tapered through the handle portion. In such embodiments, the reel seat 12 may be slid onto the shaft 2 of the fishing pole 1 from the smaller diameter tip end of the fishing pole 1. In some embodiments, this may require that the shaft 2 of the fishing pole 1 does not have eyelets 3 attached at the time. In some embodiments, the longitudinal cavity 28 of the reel seat 12 may have a diameter larger than the butt end of the shaft 2. Once the reel seat 12 is positioned in an appropriate location along the handle of the fishing pole it may be secured in place with an adhesive or epoxy.

In some embodiments, the reel seat 12 can be manufactured to be used with a fishing pole 1. For example, the main body portion 16, as described herein, can be provided. In some embodiments, the gripping member can be provided. As described herein, the gripping member 18 can comprise a material with different characteristics than a material forming the main body portion 16 adjacent the recessed area 26. In some embodiments, the outer periphery of the gripping member corresponds to the shape of the recessed area 26. In some embodiments, the gripping member is secured onto the main body portion 16 such that the gripping member 18 is secured within the recessed area. To secure the gripping member 18 to the main body portion, the gripping member 18 can be adhered to the main body portion. In some embodiments, securing the gripping member 18 within the recessed area fills the recessed area such that a transition between the gripping member 18 and the main body portion 16 adjacent the recessed area 26 is smooth.

In some embodiments, as shown in Figs. 1-5, a reel seat as disclosed herein may be positioned between one or more grips, such as a fore grip 6, a rear grip 8, and a butt cap 10. In some embodiments, a fishing pole may include fewer or additional grips than shown in the figures. For example, a fishing pole with a reel seat as disclosed herein may have a fore grip and rear grip, but no separate butt cap. In some embodiments, the fishing pole may not have a fore grip or may not have a rear grip. For example, a fly rod with a reel seat as disclosed herein may have a fore grip, but the reel seat may be at the end of the pole, thus, there may not be a rear grip.

In some embodiments, the gripping member 18 of the reel seat 12 is configured to match the gripping surfaces 19 of other grips on a fishing pole. For example, as shown in Figs. 1, 2, and 3, the gripping surfaces 19 of the grips are of a common design. In some embodiments, the gripping surfaces 19 may also be constructed of the same material. In some embodiments, the gripping member 18 of the reel seat may have a different design or material than the other grips on the handle of the fishing pole. For example, as shown in Fig. 4, the gripping member 18 of the reel seat is different from the gripping surfaces 19 of the other grip portions. In some embodiments, the gripping member 18 of the reel seat may have a different design than the gripping surfaces 19 of the other grip portions, but may be constructed of the same or similar material. In some embodiments, the reel seat 12 may have a gripping member 18 that matches one or more of the other gripping surfaces 19, but doesn't match the other gripping surfaces. For example, as shown in Fig. 5, the gripping member 18 of the reel seat matches the gripping surface 19 of the butt cap, but doesn't match the gripping surfaces 19 of the fore grip 6 and rear grip 8.

In some embodiments, the gripping surfaces 19 may comprise different material than the gripping member 18 to provide different performance benefits. For example, the gripping member 18 may be constructed with a focus on transmission of vibrations from the shaft 2 of the fishing pole to the hand of an angler so that the angler can feel small movements while actively attempting to attract a fish, feel a fish bite, or reel in a fish. On the other hand, the rear grip of the fishing pole may be primarily used for casting and transmission of vibrations to the angler may not be a priority, but instead tackiness and comfort may be the performance goals. In some embodiments, to provide the performance characteristics desirable for different grips, different materials may be used. In some embodiments, to provide the performance characteristics desirable for different grips, the same or similar materials may be used, however, the thickness of the material or one or more layers of the material may be different to provide different characteristics. Accordingly, kits may be provided including different combinations of grips with corresponding use and/or appears based characteristics along with instructions for how to incorporate the grips onto a fishing pole.

The various features and processes described above may be used independently of one another, or may be combined in various ways. All possible combinations and sub-combinations are intended to fall within the scope of this disclosure. In addition, certain methods or processes may be omitted in some implementations. The methods and processes described herein are also not limited to any particular sequence. For example, described the methods may be performed in an order other than that specifically disclosed, or multiple steps may be combined in a single step or may be performed in parallel with some other steps. The example systems and components described herein may be configured differently than described. For example, elements may be added to, removed from, or rearranged compared to the disclosed example embodiments.

Certain terminology may be used in the description for the purpose of reference only, and thus is not intended to be limiting. For example, terms such as "above" and "below" refer to directions in the drawings to which reference is made. Terms such as "front," "back," "left," "right," "rear," and "side" describe the orientation and/or location of portions of the components or elements within a consistent but arbitrary frame of reference which is made clear by reference to the text and the associated drawings describing the components or elements under discussion. Moreover, terms such as "first," "second," "third," and so on may be used to describe separate components. Such terminology may include the words specifically mentioned above, derivatives thereof, and words of similar import.

Conditional language, such as, among others, "can," "could," "might," or "may," unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment.

It should be emphasized that many variations and modifications may be made to the above-described embodiments, the elements of which are to be understood as being among other acceptable examples. All such modifications and variations are intended to be included herein within the scope of this disclosure. The foregoing description details certain embodiments. It will be appreciated, however, that no matter how detailed the foregoing appears in text or in the figures, the systems and methods can be practiced in many ways. As is also stated above, it should be noted that the use of particular terminology when describing certain features or aspects of the invention should not be taken to imply that the terminology is being re-defined herein to be restricted to including any specific characteristics of the features or aspects of the systems and methods with which that terminology is associated.

Thus in summary according to a first aspect of the present invention there is provided a reel seat to be used with a fishing pole, comprising: a main body portion defining a first end and a second end, the main body portion comprising: a longitudinal hollow cavity extending from the first end of the main body portion to the second end of the main body portion configured to receive a handle portion of a fishing pole; a securing portion including a first insert portion configured to receive a first portion of a fishing reel arm and a second insert portion configured to receive a second portion of a fishing reel arm; and a recessed area extending around at least some of an exterior portion of the main body portion of the reel seat, the recessed area including a depth and an outer periphery defining a recessed area shape; and a gripping member comprising a material with different characteristics than a material forming the main body portion adjacent the recessed area, wherein an outer periphery of the gripping member corresponds to the recessed area shape; wherein the gripping member is secured to the main body portion such that the gripping member is secured within the recessed area.

According to a second aspect of the present invention there is provided a fishing pole having the above described reel seat attached to a handle portion of the fishing pole. Preferably the fishing pole further comprises a fore grip, a rear grip, and a butt grip, wherein the gripping member of the attached reel seat corresponds to the material or appearance of at least a portion of the fore grip, the rear grip, or the butt grip. Preferably the fishing pole further comprises a reel attached to the securing portion by the first and second insert portions.

Advantageously the gripping member of the above described reel seat includes multiple layers. Preferably an inner layer of the gripping member comprises ethylene vinyl acetate.

Advantageously an outer surface of the gripping member of the above described reel seat comprises polyurethane.

Advantageously the securing portion of the above described reel seat is positioned on a first side of the main body portion and the recessed portion extends from the first side to a second side of the main body portion opposite the first side.

Advantageously the first insert portion of the above described reel seat is fixed relative to the main body portion. Preferably the recessed area extends over the at least a portion of the first insert portion.

Advantageously the second insert portion of the above described reel seat is configured to translate longitudinally along the main body of the reel seat. Preferably the first insert portion is configured to translate longitudinally along the main body of the reel seat. Alternatively the first insert portion is fixed relative to the main body portion.

Advantageously the gripping member of the above described reel seat is secured to the main body portion with adhesive. Preferably the gripping member forms a seam on the first side of the reel seat including the first and second insert portions of the securing portion.

Advantageously the gripping member of the above described reel seat fills the majority of the recessed area. Preferably a transition between the gripping member and the main body portion adjacent the recessed area is smooth.

Advantageously the gripping member of the above described reel seat has a thickness equal to the depth of the recessed area.

Advantageously the gripping member of the above described reel seat is resilient.

According to a further aspect of the present invention there is provided a method of making a reel seat to be used with a fishing pole, comprising: providing a main body portion defining a first end and a second end, the main body portion comprising: a longitudinal hollow cavity extending from the first end of the main body portion to the second end of the main body portion configured to receive a handle portion of a fishing pole; a securing portion including a first insert portion configured to receive a first portion of a fishing reel arm and a second insert portion configured to receive a second portion of a fishing reel arm; and a recessed area extending around at least some of an exterior portion of the main body portion of the reel seat; providing a gripping member comprising a material with different characteristics than a material forming the main body portion adjacent the recessed area, wherein an outer periphery of the gripping member corresponds to the recessed area shape; and securing the gripping member onto the main body portion such that the gripping member is secured within the recessed area.

Advantageously the provided gripping member includes multiple layers. Preferably the provided gripping member includes an inner layer comprising ethylene vinyl acetate.

Advantageously the step of securing the gripping member to the main body portion includes adhering the gripping member to the main body portion.

Advantageously the provided gripping member is resilient.

Advantageously the step of securing the gripping member within the recessed area fills the recessed area such that a transition between the gripping member and the main body portion adjacent the recessed area is smooth.

## Claims

1. A reel seat to be used with a fishing pole, comprising:
a main body portion defining a first end and a second end, the main body portion comprising:
a longitudinal hollow cavity extending from the first end of the main body portion to the second end of the main body portion configured to receive a handle portion of a fishing pole;
a securing portion including a first insert portion configured to receive a first portion of a fishing reel arm and a second insert portion configured to receive a second portion of a fishing reel arm; and
a recessed area extending around at least some of an exterior portion of the main body portion of the reel seat, the recessed area including a depth and an outer periphery defining a recessed area shape; and
a gripping member comprising a material with different characteristics than a material forming the main body portion adjacent the recessed area, wherein an outer periphery of the gripping member corresponds to the recessed area shape;
wherein the gripping member is secured to the main body portion such that the gripping member is secured within the recessed area.

2. A fishing pole having the reel seat according to Claim 1 attached to a handle portion of the fishing pole

3. The fishing pole of Claim 2, further comprising a fore grip, a rear grip, and a butt grip, wherein the gripping member of the attached reel seat corresponds to the material or appearance of at least a portion of the fore grip, the rear grip, or the butt grip.

4. The fishing pole of Claim 2 or Claim 3, further comprising a reel attached to the securing portion by the first and second insert portions.

5. The reel seat of Claim 1, wherein the gripping member includes multiple layers.

6. The reel seat of Claim 5, wherein an inner layer of the gripping member comprises ethylene vinyl acetate.

7. The reel seat of Claim 1 or any of Claims 5 to 6, wherein an outer surface of the gripping member comprises polyurethane.

8. The reel seat of Claim 1 or any of Claims 5 to 7, wherein the securing portion is positioned on a first side of the main body portion and the recessed portion extends from the first side to a second side of the main body portion opposite the first side.

9. The reel seat of Claim 1 or any of Claims 5 to 8, wherein the first insert portion is fixed relative to the main body portion.

10. The reel seat of Claim 9, wherein the recessed area extends over the at least a portion of the first insert portion.

11. The reel seat of Claim 1 or any of Claims 5 to 10, wherein the gripping member fills the majority of the recessed area.

12. The reel seat of Claim 11, wherein a transition between the gripping member and the main body portion adjacent the recessed area is smooth.

13. The reel seat of Claim 1 or any of Claims 5 to 12, wherein the gripping member has a thickness equal to the depth of the recessed area.

14. The reel seat of Claim 1 or any of Claims 5 to 13, wherein the gripping member is resilient.

15. A method of making a reel seat to be used with a fishing pole, comprising:
providing a main body portion defining a first end and a second end, the main body portion comprising:
a longitudinal hollow cavity extending from the first end of the main body portion to the second end of the main body portion configured to receive a handle portion of a fishing pole;
a securing portion including a first insert portion configured to receive a first portion of a fishing reel arm and a second insert portion configured to receive a second portion of a fishing reel arm; and
a recessed area extending around at least some of an exterior portion of the main body portion of the reel seat;
providing a gripping member comprising a material with different characteristics than a material forming the main body portion adjacent the recessed area, wherein an outer periphery of the gripping member corresponds to the recessed area shape; and
securing the gripping member onto the main body portion such that the gripping member is secured within the recessed area.

16. The method of Claim 15, wherein the provided gripping member includes multiple layers.

17. The method of Claim 16, wherein the provided gripping member includes an inner layer comprising ethylene vinyl acetate.

18. The method of any of Claims 15 to 17, wherein the step of securing the gripping member to the main body portion includes adhering the gripping member to the main body portion.

19. The method of any of Claims 15 to 18, wherein the provided gripping member is resilient.

20. The method of any of Claims 15 to 19, wherein the step of securing the gripping member within the recessed area fills the recessed area such that a transition between the gripping member and the main body portion adjacent the recessed area is smooth.
